# EUROPEAN PATENT APPLICATION

(11) **EP 1 814 257 A1**
(43) Date of publication of application: **01.08.2007**
(21) Application number: 07250330.3
(22) Date of filing: 26.01.2007
(51) Int. Cl.: H04L 12/24, H04L 29/06

(54) **Cloaked device scan**

(30) Priority: 27.01.2006 US 275774
(71) Applicant: Accenture Global Services GmbH, 8200 Schaffhausen (CH)
(72) Inventor: Brim, Robert John, Hudson, Wisconsin 54016 (US)
(74) Representative: Fennell, Gareth Charles

(57) **Abstract**

The invention described herein provides a method and system for the detection and location of unauthorized or otherwise targeted network devices on a network. According to aspects of the invention, the method disclosed herein consists of gathering a logical mapping of the devices on a computer network (which can be faked, spoofed or easily hidden) by mining data from the routers and switches on the network, and matching the logical mapping of the devices to the physical reality of the network environment which can't be easily hidden or spoofed. Based on the physical information acquired about the devices on the network, it is possible to identify devices that are either unauthorized or are otherwise targeted.

## Description

### FIELD OF THE INVENTION

This invention relates to systems and methods for locating unauthorized or otherwise targeted devices on a network by utilizing the information available from switches and routers through use of a passive scan.

### BACKGROUND OF THE INVENTION

Networks and enterprise systems are becoming increasingly dispersed and complex. From a network management perspective, this means that network devices are increasingly more difficult to keep track of and manage from a centralized location. In addition, computers and other network devices are now equipped with added capabilities such as built-in firewalls and Network Address Translation (NAT), which allows for unmanaged security settings on a device that is hooked up to a network.

In an enterprise environment, network managers typically try to keep workstations and other network devices updated and protected by one or more various anti-virus capabilities that are available. However, viruses and worms on un-managed computers crop up, typically because the infected device has gained access to the network in an unauthorized manner, because the device is "stealthing" or hiding on the network, or because the device simply isn't configured properly. For example, computers may be configured with personal firewalls to hide the computer from a network security team, or a computer may be configured such that it does not respond to "pings" or other requests for information.

Commercial products that are available require putting a device or agent on every local segment of a network, and for large networks with a large number of remote locations, this is not cost effective. Further, most products on the market only take advantage of traffic information from either the switch or the router on a local segment, if at all. Such a scenario may work for monitoring traffic, but can be costly, time intensive in setup and training, and generally not user friendly from a network scan perspective.

In most networks, every device plugged into the network needs to be managed by the network administrator, and all of the traditional methods to do this assume that the device is a known device and is visible. Therefore, there is a need for a system and method, which can be implemented in a large-scale fashion and can be passively performed, for locating the unauthorized or unknown devices that are attached to a network.

### SUMMARY OF THE INVENTION

Unlike most tools in the network security realm, aspects of this invention allow for the passive monitoring of network devices by mining data available from the routers and switches connected to a network. By combining the data available from the routers and the switches on a network, the invention provides a method for passively scanning a network without placing additional hardware on each network segment.

By use of embodiments of the present invention, a device can be configured to conceal itself, but it can't hide its physical presence on the wire. Aspects of the present invention use information that is available on the network through the switches and routers to create a passive scan to locate or track unmanaged devices. Once the information is available, it can be determined which devices need to be disconnected from the network and which devices can stay on the network.

According to one embodiment of the invention, logical network maps of the devices connected to a network are gathered from stored data that exists on the routers and switches. Each router on the network is queried for a list of IP addresses and MAC addresses connected to the router (the ARP table). Each switch on the network is queried for a list of MAC addresses connected to the switch and the switch port that the physical device is using (the CAM Table). The data from both the routers and the switches is combined to provide a list of IP address, MAC Address, and location on the Switch. The list is further refined using IEEE Organizationally Unique Identifier (OUI) files of MAC Address to Vendor registration to match up physical machine type to each MAC address.

Using a preset filter of acceptable machine types at specific IP Addresses, unauthorized or otherwise targeted devices can be located and removed or otherwise dealt with.

For example, aspects of the present invention could help a network administration team locate a specific type of unauthorized workstation, such as an IBM® computer or a Dell® laptop, assuming for illustrative purposes that IBM® and Dell® devices were unauthorized, or other unauthorized device, such as an X-Box® gaming device, that is connected to a network.

### BRIEF DESCRIPTION OF THE DRAWINGS

The present invention is illustrated by way of example in the following figures and is not limited by the accompanying figures in which:

Figure 1 depicts an exemplary network on which an embodiment of the present invention may be performed.

Figure 2 depicts an exemplary system suitable for use in performing aspects of the disclosed invention.

Figure 3 depicts a monitoring computer communicating with a router and a switch on a network, according to one embodiment of the present invention.

Figure 4 is a flowchart depicting an embodiment of a data mining process according to the present invention.

Figure 5 is a flowchart depicting an embodiment of the process for locating targeted devices according to the present invention.

### DETAILED DESCRIPTION OF THE INVENTION

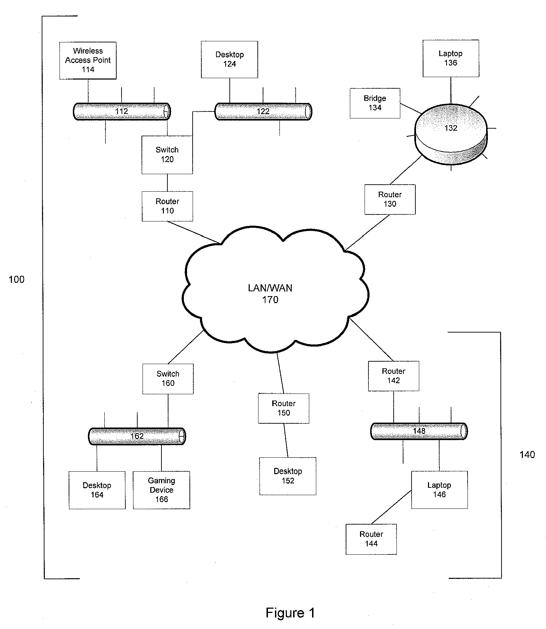

Aspects of the present invention allow for the passive monitoring of network devices by mining data available from the routers and switches connected to a network. Figure 1 depicts a simplified exemplary network on which the present invention may be utilized. Network 100 may have a number of routers 110, 130, 142, 144, and 150 attached to it, as well as a number of switches 120 and 160. The network may be a Local Area Network (LAN) 170 with discrete subnets or it may be multiple LANS, such as network 140 separated by a Wide Area Network (WAN) 170. Figure 1 is a simplified example of an expansive and complex enterprise network with examples of the multiple types of devices that may be utilized. For example, the present invention may be used to locate targeted or unauthorized laptops 136 and 146, desktops 124, 152 and 164, wireless access point 114, network bridge 134, or a gaming device 166. Figure 1 also demonstrates the breadth of network technologies that may be utilized such as Ethernet backbones 112, 122, 148 and 162, a wireless network from 114, or a token ring backbone 132. Figure 1 demonstrates that in a typical WAN scenario, switch 120 is connected to router 110, but Ethernet backbones 112 and 122 are only illustrative of various wiring solutions that may connect the various devices. Thus, it should be understood that Figure 1 is for illustrative purposes only and does not depict the entire range of network equipment or network infrastructures that may be relevant in practicing the present invention. It will be further appreciated that the network connections shown are exemplary and other ways of establishing a communications link between the computers can be used. The existence of any of various well-known protocols, such as TCP/IP, Frame Relay, Ethernet, FTP, HTTP and the like, is presumed.

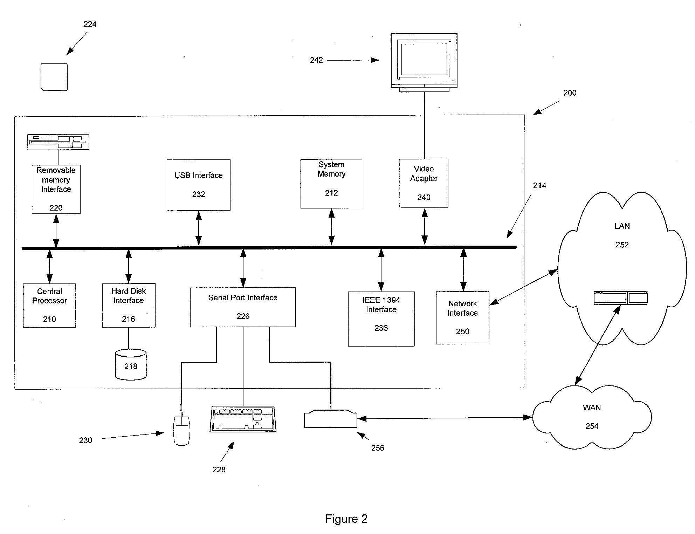

Aspects of the invention may be implemented with conventional networked computer systems such as the system 200 shown in Figure 2. Computer 200 includes a central processor 210, a system memory 212 and a system bus 214 that couples various system components including the system memory 212 to the central processor unit 210. System bus 214 may be any of several types of bus structures including a memory bus or memory controller, a peripheral bus, and a local bus using any of a variety of bus architectures. The structure of system memory 212 is well known to those skilled in the art and may include a basic input/output system (BIOS) stored in a read only memory (ROM) and one or more program modules such as operating systems, application programs and program data stored in random access memory (RAM).

Computer 200 may also include a variety of interface units and drives for reading and writing data. In particular, computer 200 includes a hard disk interface 216 and a removable memory interface 220 respectively coupling a hard disk drive 218 and a removable memory drive 222 to system bus 214. Examples of removable memory drives include magnetic disk drives and optical disk drives. The drives and their associated computer-readable media, such as a floppy disk 224 provide nonvolatile storage of computer readable instructions, data structures, program modules and other data for computer 200. A single hard disk drive 218 and a single removable memory drive 222 are shown for illustration purposes only and with the understanding that computer 200 may include several of such drives. Furthermore, computer 200 may include drives for interfacing with other types of computer readable media.

A user can interact with computer 200 with a variety of input devices. Figure 2 shows a serial port interface 226 coupling a keyboard 228 and a pointing device 230 to system bus 214. Pointing device 228 may be implemented with a mouse, track ball, pen device, or similar device.

Computer 200 may include additional interfaces for connecting devices to system bus 214. Figure 2 shows a universal serial bus (USB) interface 232 and an IEEE 1394 interface 236, which may be used to couple additional devices to computer 200. Furthermore, interface 236 may be configured to operate with particular manufacture interfaces such as FireWire developed by Apple Computer and i.Link developed by Sony. Input devices may also be coupled to system bus 214 through a parallel port, a game port, a PCI board or any other interface used to couple and input device to a computer.

Computer 200 also includes a video adapter 240 coupling a display device 242 to system bus 114. Display device 242 may include a cathode ray tube (CRT), liquid crystal display (LCD), field emission display (FED), plasma display or any other device that produces an image that is viewable by the user. Additional output devices, such as a printing device (not shown), may be connected to computer 200.

Computer 200 can operate in a networked environment using logical connections to one or more remote computers or other devices, such as a server, a router, a network personal computer, a peer device or other common network node, a wireless telephone or wireless personal digital assistant. Computer 200 includes a network interface 250 that couples system bus 214 to a LAN 252.

A WAN 254, such as the Internet, can also be accessed by computer 200. Figure 2 shows a modem unit 256 connected to serial port interface 226 and to WAN 254. Modem unit 256 may be located within or external to computer 200 and may be any type of conventional modem such as a cable modem or a satellite modem. LAN 252 may also be used to connect to WAN 154. Figure 1 shows a router 158 that may connect LAN 252 to WAN 254 in a conventional manner.

The operation of computer 200 can be controlled by a variety of different program modules. Examples of program modules are routines, programs, objects, components, data structures, etc., that perform particular tasks or implement particular abstract data types. The present invention may also be practiced with other computer system configurations, including hand-held devices, multiprocessor systems, microprocessor-based or programmable consumer electronics, network PCS, minicomputers, mainframe computers, personal digital assistants and the like. Furthermore, the invention may also be practiced in distributed computing environments where tasks are performed by remote processing devices that are linked through a communications network. In a distributed computing environment, program modules may be located in both local and remote memory storage devices.

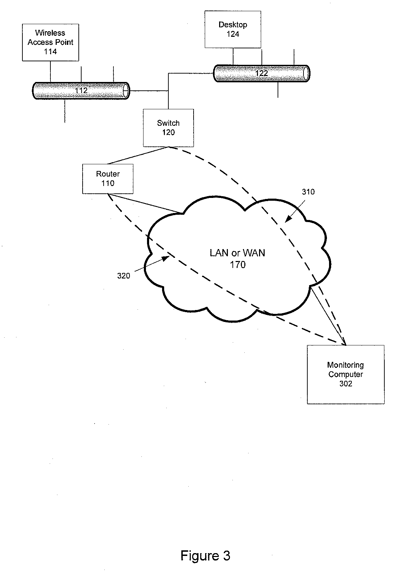

Figure 3 depicts a monitoring computer 302 communicating with a router 110 and a switch 120 on a computer network, according to one embodiment of the present invention. (Note that some number references in Figure 3 are carried over from Figure 1). Monitoring computer 302 may be configured as a computer system 200 described above. Monitoring computer 302 can connect to router 110 and switch 120 in order to mine network data from the devices. According to embodiments of the present invention, monitoring computer 302 may connect to network routers and switches remotely over a WAN such as the public Internet, or may connect locally over a LAN.

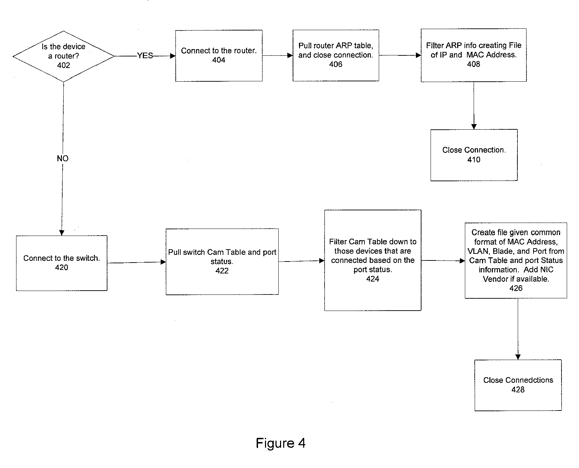

At a high level, aspects of the present invention include the mining of logical network data from the switches and routers on a network, the mapping of the logical network data to the physical network devices, and the identification of acceptable network devices. Figure 4 is a flowchart depicting the initial process of mining logical network data from the routers and switches on the network according to an embodiment of the invention. At step 402, it is determined if the network device to be mined is a router. If the device is a router, the process moves to step 404. If the network device to be mined is a switch, the process moves to step 420. At step 404, a connection is made to the router to pull information. Figure 3 depicts a connection 320 between monitoring computer 302 and router 110 according to an embodiment of the invention. The connection may be made manually or may be made by a scripted session such as a scripted telnet session written in Perl or other programming language. Those skilled in the art will appreciate that a connection can be made and information may be retrieved from the router using a variety of scripting mechanisms known in the art. At step 406 the router's Address Resolution Protocol (ARP) table is retrieved. ARP is a well-known protocol within the TCP/IP protocol suite, specified by RFC 826, and is used to map IP addresses to corresponding MAC addresses that are hard-coded on the network interface card of a device. The ARP table is a cache of these network address mappings that is typically stored on a local computer, such as a router, and dynamically updated as the network changes. An ARP table is also well-known in the art. At step 406, the information retrieved in the ARP table is used to create a file or a list in memory of the logical network map from the router, i.e. a list of the IP addresses of each network device along with the MAC address for the device. After the file is created from the information in the router, the connection to the router is closed at step 410. Steps 402 to 410 may be performed on all of the routers existing in the network to be scanned.

At step 420, when it is determined that the network device to be mined is a switch, the process makes a connection to the switch to retrieve logical network information from the switch. Figure 3 depicts a connection 310 between monitoring computer 302 and switch 120 according to an embodiment of the invention. Again, the connection to the switch at 420 may be made manually or may be made by a scripted session such as a scripted telnet session written in Perl or other programming language. Those skilled in the art will appreciate that a connection can be made and information may be retrieved from the switch using a variety of scripting mechanisms known in the art. Once a connection is made to the switch, at step 422 the switch's Cam Table and port status is retrieved. A Cam Table is also well known in the art and provides a list of MAC addresses against ports and virtual LANs (VLANs) on the switch. Port status will provide information on the switch ports that are connected and those that are not connected. At step 424, the information in the CAM Table is filtered to account for those ports and VLANs that are connected. At step 426, the information used to create a file or a list in memory of the logical network map from the switch, *i.e.* a list of the MAC address for the device, the VLAN and the port. After the file is created from the information in the switch, the connection to the switch is closed at step 428. Again, steps 420 to 428 are performed on all of the switches existing in the network to be scanned.

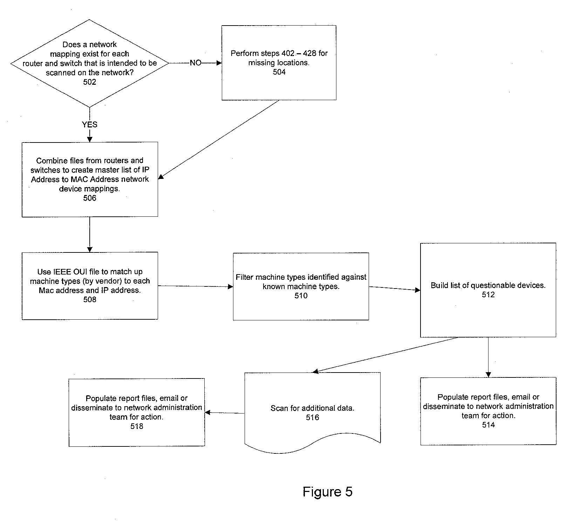

Figure 5 is a flowchart depicting the process of assembling the logical network mapping information received from the routers and switches, the mapping of the logical network data to the physical network devices, and the identification of acceptable or targeted network devices. At step 502, the process checks to ensure that a logical network mapping file exists for each router and switch on the network. Alternatively, it may be determined that certain segments of the network are secure, and thus it is not necessary for all routers or switches to be monitored. If a file is missing for any of the routers or switches intended to be mined, the appropriate processes in the set of 402 - 428 (identified in Figure 4) are performed for the missing routers or switches at step 504. At step 506, the the data is combined from the switches and routers to provide a combined list of IP address, MAC Address, and location on the Switch, if applicable. At step 508, the combined list is further refined using well known IEEE Organizationally Unique Identifiers (OUI) to match each MAC address to a specific device vendor, in order to identify machine types existing on the network. IEEE OUIs are identifiers within a MAC address that identify the vendor of the hardware, and a list of IEEE OUI MAC address to vendor registrations are readily available to those skilled in the art.

At step 510, using a preset filter of acceptable physical machine types at specific IP addresses, machines are flagged for potential violations or for further follow-up. For example, if unapproved vendor machines appear in the list, the machines could be identified and removed based on the IP address to vendor information. At 512, a list of the questionable - e.g. unauthorized or specifically targeted - physical machines and IP addresses is built. This list may be disseminated to a network administration team for further follow-up at 514.

It may be possible to further fingerprint the device by using NMAP, an open source port scanning software, or any other known fingerprinting technique to gather additional information about each device such as the type of operating system being used or other useful information. This is seen at step 516. This additional information may also be disseminated to a network administration team for further follow-up and/or to remove offending devices from the network at step 518. Removal of devices from the network may be accomplished manually by a network administration team. Further embodiments of the invention provide for automatic termination of an offending device. Automatic removal may be appropriate in certain network environments such as that of a financial institution environment, where timing may be critical to the security of data on the network.

By mining the data trail left behind by all devices on a network, aspects of the present invention allow for network administration to identify network devices that are not readily identifiable by other means. For example, devices operating in a Windows XP®, SP2® or Linux environment may be configured to not respond to a standard network ping, or the device may be using a consumer-level firewall or NAT functionality, allowing the device to effectively hide from network administration. Such devices may be harmless or could be propagating worms or viruses throughout the network that could destroy transactional data or compromise private data.

It is further contemplated that embodiments of the invention could be provided as a network monitoring service. In such a scenario, one entity may be used to monitor the network activity of another entity and then send a report/alert to the entity being monitored to advise of what is happening on the network (e.g., monitoring an enterprise network on behalf of a client). Such a scenario may be set up in-house or may be set up over a WAN connection, and could be used as a one-time sweep of a network or set up for on-going monitoring.

It is also contemplated that aspects of the invention may be used to discover those devices that are not necessarily intentionally shielded, but are just not authorized on the network. For example, an employee might connect a device to the wrong place on the network or connect a device that he/she did not know was unauthorized. As another example, an employee might reformat the hard drive of a corporate laptop but failed to load all of the relevant corporate software to make the device viable on the corporate network, such as virus protection software. Such a device would be locatable by the current system and method, allowing the network management team to identify the device for proper management. In this scenario, if a network is using static IP addresses and/or a specific IP address range for DHCP, the device could be identified. Another method for identifying such a device would be to not only scan devices that appear to be unauthorized but to scan all machines on the network to ensure proper configuration. For example, devices could be tested to determine if they have a proper corporate-given name or the correct anti-virus software responding. If the tests fail, then the device can be scanned using the disclosed techniques to ensure proper management and remediate the device.

Another embodiment of the invention contemplated is the scanning of home wireless networks for unauthorized devices that are utilizing the network. Given the growing number of home computer users utilizing a wireless network, it would be desirable to use aspects of the invention described herein to locate network devices that are utilizing wireless bandwidth on a home wireless network without permission. According to an embodiment of the invention, data could be mined from a wireless router to identify the rogue network devices.

It should be noted that certain aspects of the present invention have been described herein, but the invention is not limited to the embodiments described. Those skilled in the art will recognize variations embodied by the present invention upon reading or upon practice of the invention. The following claims demonstrate the breadth of the invention.

## Claims

1. A method of locating unauthorized devices connected to a computer network, comprising the steps of:
(a) receiving a logical network mapping of the devices connected to the network;
(b) matching the logical network mapping of the devices to a physical network mapping of the devices; and
(c) examining the physical network mapping of the devices to determine if the devices are unauthorized devices.

2. The method of claim 1, wherein step (a) comprises the steps of:
(i) receiving ARP table information from routers located on the network regarding devices connected to the network; and
(ii) receiving MAC address to port mapping information, port status information, and virtual LAN information from switches located on the network regarding devices connected to the network.

3. The method of claim 2, wherein step (a) further comprises the step of:
(iii) identifying the IP address to MAC address mapping for the devices by using the information received from the routers and the switches located on the network.

4. The method of claim 3, wherein step (b) comprises matching each device MAC address to a device vendor by use of a IEEE OUI.

5. The method of claim 4, wherein step (b) further comprises building a list of device IP address to device MAC address to device vendor mappings to identify physical devices.

6. The method of claim 5, wherein step (c) comprises reviewing the list of device IP address to device MAC address to device vendor mappings to locate unauthorized physical devices.

7. The method of any preceding claim, wherein the network is separated by a wide area network.

8. A method of detecting one or more target devices connected to a computer network, comprising the steps of:
(a) gathering logical network address information about the devices connected to the network;
(b) determining physical information about the devices connected to the network by using the logical network address information; and
(c) examining the physical information about the devices connected to the network to locate one or more target devices.

9. The method of claim 8, wherein step (a) comprises running a scripted telnet session to gather the logical network address information from routers and switches located on the network.

10. The method of claim 8, wherein step (a) comprises the steps of:
(i) gathering ARP table information from routers located on the network regarding devices connected to the network; and
(ii) gathering MAC address to port mapping information, port status information, and virtual LAN information from switches located on the network regarding devices connected to the network.

11. The method of claim 10, wherein step (a) further comprises the step of:
(iii) identifying the IP address to MAC address mapping for the devices by using the information received from the routers and the switches located on the network.

12. The method of claim 11, wherein step (b) comprises matching each device MAC address to a device vendor by use of a IEEE OUI.

13. The method of claim 12, wherein step (b) further comprises building a list of device IP address to device MAC address to device vendor mappings to identify physical devices.

14. The method of claim 13, wherein step (c) comprises examining the list of device IP address to device MAC address to device vendor mappings to locate target physical devices.

15. The method of any of claims 8 to 14, wherein the network is separated by a wide area network.

16. A computer-readable medium containing computer-executable instructions for causing a computer device to perform the steps comprising:
receiving logical network address information about the devices connected to the network;
determining physical information about the devices connected to the network by using the logical network address information; and
examining the physical information about the devices connected to the network to locate one or more target devices.

17. The computer-readable medium of claim 16, wherein the step of receiving logical network address information about the devices connected to the network comprises the steps of:
receiving ARP table information from routers located on the network regarding devices connected to the network; and
receiving MAC address to port mapping information, port status information, and virtual LAN information from switches located on the network regarding devices connected to the network.

18. The computer-readable medium of claim 17, further comprising computer-executable instructions for causing the computer device to perform the step of:
identifying the IP address to MAC address mapping for the devices by using the information received from the routers and the switches located on the network.

19. The computer-readable medium of claim 18, wherein the step of determining physical information about the devices connected to the network by using the logical network address information comprises matching each device MAC address to a device vendor by use of a IEEE OUI.

20. The computer-readable medium of claim 19, wherein the step of determining physical information about the devices connected to the network by using the logical network address information further comprises building a list of device IP address to device MAC address to device vendor mappings to identify physical devices.

21. The computer-readable medium of claim 20, wherein the step of examining the physical information about the devices connected to the network to locate one or more target devices comprises reviewing the list of device IP address to device MAC address to device vendor mappings to locate unauthorized physical devices.
